(19) Europäisches Patentamt
European Patent Office
Office européen des brevets

(11) Numéro de publication : **0 360 661 B1**

(12) **FASCICULE DE BREVET EUROPEEN**

(45) Date de publication du fascicule du brevet :
02.09.92 Bulletin 92/36

(51) Int. Cl.⁵ : **B64C 27/46**

(21) Numéro de dépôt : **89402497.5**

(22) Date de dépôt : **13.09.89**

(54) **Pale pour voilure tournante d'aéronef et voilure tournante comportant une telle pale.**

(30) Priorité : **19.09.88 FR 8812188**

(43) Date de publication de la demande :
**28.03.90 Bulletin 90/13**

(45) Mention de la délivrance du brevet :
**02.09.92 Bulletin 92/36**

(84) Etats contractants désignés :
**DE GB IT**

(56) Documents cités :
**US-A- 3 822 105**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Damongeot, Alain**
**3, La Bertrane Bas**
**F-13122 Ventrabren (FR)**

(74) Mandataire : **Bonnetat, Christian**
**CABINET BONNETAT 23, Rue de Léningrad**
**F-75008 Paris (FR)**

## Description

La présente invention concerne des perfectionnements aux pales des voilures tournantes pour aéronefs, ainsi que les voilures tournantes comportant de telles pales perfectionnées.

On sait que, si l'on considère une pale de voilure tournante, telle que ses sections élémentaires successives le long de l'envergure aient une corde constante et que les cordes desdites sections élémentaires soient coplanaires, les forces élémentaires de portance et de trainée liées à chacune desdites sections élémentaires de pale varient sensiblement comme le carré de la distance d'une section élémentaire considérée à l'axe de rotation de la voilure tournante. Il en résulte que la zone d'extrémité de la pale a une influence importante sur le fonctionnement aérodynamique du rotor et que la résultante aérodynamique des forces de portance et de traînée se situe à environ 75 % de l'envergure de la pale.

On sait par ailleurs que, pour adapter au mieux l'incidence des sections élémentaires successives aux vitesses aérodynamiques qu'elles rencontrent du fait de la rotation de la pale, on procède généralement au vrillage d'une telle pale autour de son axe longitudinal, afin de faire travailler celle-ci à grand calage au voisinage de l'axe de rotation de la voilure tournante où la vitesse est faible et à faible calage vers l'extrémité de la pale où la vitesse est plus élevée. Un tel vrillage est généralement linéaire, c'est-à-dire que la variation élémentaire d$\theta$ de l'angle de vrillage $\theta$ sur une variation élémentaire dr d'envergure est constante. Grâce à une telle mesure, il est possible d'améliorer la finesse Cz/Cx de fonctionnement des profils le long de l'envergure de la pale.

Cependant, comme de nombreuses expérimentations l'ont montré, il se forme en extrémité de pale un tourbillon marginal très intense, résultant de la compensation des différences de pression régnant entre l'intrados et l'extrados des sections proches de l'extrémité. La présence de ce tourbillon marginal conduit d'une part à un accroissement de la puissance consommée par le rotor et d'autre part à une émission importante de bruit tant aux faibles vitesses d'avancement par interaction entre le tourbillon et les pales suivantes qui l'interceptent, qu'aux grandes vitesses d'avancement, du fait des conditions aérodynamiques extrêmes de fonctionnement avec l'apparition de la compressibilité de l'air dans ces conditions et la présence d'ondes de choc.

L'objet de la présente invention est une extrémité de pale qui réduit notablement la formation du tourbillon marginal et qui permet d'améliorer les performances aérodynamiques d'une voilure tournante et d'en diminuer les bruits de fonctionnement.

Elle consiste à vriller la zone d'extrémité de la pale à partir de 70 % de l'envergure de telle sorte que le coefficient de portance des sections diminue de façon progressive jusqu'à une valeur sensiblement nulle à l'extrémité de la pale. Ainsi, sans affecter la portance globale de la zone d'extrémité de pale, on supprime les fortes différences de pression entre intrados et extrados et par conséquent, on y élimine les conditions de formation du tourbillon marginal.

A cette fin, selon l'invention, la pale pour voilure tournante d'aéronef, dont les sections élémentaires successives le long de l'envergure $\underline{R}$ présentent une corde constante $\underline{Co}$ et sont vrillées de l'emplanture de la pale vers l'extrémité de celle-ci d'un angle $\theta$ dont la variation d $\theta$/dr en fonction de l'envergure relative $\underline{r}$ d'une section élémentaire considérée est constante, est caractérisée en ce que ladite pale présente dans la zone d'extrémité s'étendant au moins entre 0,85 R et au moins 0,95 R un survrillage tel que le vrillage résultant soit dans ladite zone, inférieur ou au plus égal, en valeur absolue, à un vrillage limite $\theta$lim tel que le vrillage résultant soit pour r = R égal, en valeur absolue, à $\theta$lim afin de rendre Cz égal à zéro pour r = R, le vrillage limite étant donné par

$$(1) \qquad \theta\text{lim} = \theta + \frac{1}{k}\,(\text{Czlim-Cz}),$$

équation dans laquelle k est le rapport de la variation du coefficient de portance Cz à la variation d'incidence i (pour un nombre de mach de 0,6 vers l'extrémité de pales, le coefficient k est alors égal à 0,13) et Czlim est une valeur limite supérieure du coefficient de portance Cz telle que, d'une part, dans une première fraction de la zone d'extrémité s'étendant au moins entre r = 0,85 R et approximativement r = 0,9 R, le coefficient de portance limite a une valeur

$$(2) \qquad \text{Czlim1} = \text{Czm-a(r/R - b)},$$

équation dans laquelle Czm est le coefficient de portance moyen de ladite voilure tournante, et a,b sont des constantes, au moins égales à 1,6 et 0,87 respectivement, et telle que, d'autre part, dans une seconde fraction de la zone d'extrémité s'étendant entre approximativement r = 0,9R et au moins r = 0,95 R, le coefficient de portance limite a une valeur Czlim2 décroissant linéairement de la valeur de Czlim1 donnée par l'équation (2) pour r = 0,9 jusqu'à la valeur zéro pour r = R.

La première fraction de zone d'extrémité peut s'étendre en envergure entre r = 0,7 R et approximativement r = 0,9 R. Par ailleurs, ladite seconde fraction de zone d'extrémité peut s'étendre entre approximativement r = 0,9 R et r = R.

Comme cela sera montré par la suite, si une pale de voilure tournante satisfait, en ce qui concerne son vrillage, aux conditions ci-dessus, sa répartition de coefficient de portance en envergure, caractérisée par une décroissance progressive jusqu'à une valeur nulle, permet de réduire substantiellement la formation du tourbillon marginal et par conséquent conduit à l'augmentation des performances et la diminution du bruit de fonctionnement.

On remarquera que la mise en oeuvre de la présente invention pour le perfectionnement de pales à vrillage linéaire est particulièrement avantageuse, car on ne modifie pas le centrage dynamique en corde de ladite pale dans la zone d'extrémité, de telle sorte que l'équilibre général de la pale en fonctionnement sur l'aéronef n'est pas altéré.

Dans le cas où, dans lesdites première et seconde fractions de la zone d'extrémité, la corde desdites sections élémentaires successives de la pale n'est plus constante ou quasiconstante, mais évolue en fonction de la position $r$ en envergure desdites sections élémentaires, la surface portante de ladite pale en extrémité subit, par rapport à une pale rectangulaire, une variation de surface portante et donc de coefficient de portance. Il est donc nécessaire d'en tenir compte.

Aussi, lorsque dans lesdites première et seconde fractions de la zone d'extrémité, lesdites sections élémentaires successives présentent une corde évolutive $\underline{C}$, qui est une fonction C(r) de la position $\underline{r}$ en envergure d'une section élémentaire considérée, le vrillage de ladite pale est, en valeur absolue, avantageusement au moins égal au vrillage limite θlimC donné par

$$(3) \qquad \theta\text{lim}C = \theta + \frac{1}{k} (Cz\text{lim}.Co/C(r) - Cz),$$

expression dans laquelle le rapport Co/C(r) est représentatif de l'effilement de l'extrémité de la pale et le coefficient de portance Czlim est choisi, dans lesdites fractions de zone d'extrémité, au plus égal à une valeur limite CzlimC telle que

$$(4) \qquad Cz\text{lim}C = Cz\text{lim}.Co/C(r),$$

expression dans laquelle Czlim représente soit Czlim1, soit Czlim2 définies ci-dessus pour une pale rectangulaire en fonction de celle desdites première ou seconde fractions de zone d'extrémité qui est concernée.

L'expérience a montré que les limites de vrillage θlim et θlimC respectivement données par les équations (1) et (3) pouvaient éventuellement être dépassées, à condition que la valeur absolue de l'angle de vrillage réel communiqué à la pale soit, en tout point desdites première et seconde fractions de zone, au moins égal à la valeur correspondante de θlim ou de θlimC, diminuée de 0,5°.

Par ailleurs, pour des raisons de construction, il est souvent avantageux que lesdites équations (1) et (3) soient appliquées dans une seconde fraction de zone d'extrémité définie par le domaine s'étendant d'approximativement r = 0,9R à r = 0,95R et par le point r = R, un raccordement à vrillage linéaire étant réalisé entre r = 0,95R et r = R, quelle que soit la fonction C(r).

Les figures du dessin annexé feront bien comprendre comment l'invention peut être réalisée. Sur ces figures, des références identiques désignent des éléments semblables.

La figure 1 est une vue en plan schématique d'une pale rectangulaire pour voilure tournante.

La figure 2 est un diagramme sur lequel sont représentées, en fonction de l'envergure relative r/R, la répartition réelle du coefficient de portance de la pale de la figure 1, et la répartition limite conforme à la présente invention.

La figure 3 illustre la répartition limite d'angle de vrillage permettant à la pale de la figure 1 de satisfaire aux conditions de perfectionnement définies par la présente invention.

La figure 4 est une vue en plan schématique d'une pale pour voilure tournante, à extrémité effilée de forme trapézoïdale.

La figure 5 est un diagramme donnant, en fonction de l'envergure relative r/R, la limite de vrillage conforme à l'invention, pour la pale de la figure 4.

La figure 6 montre, à plus grande échelle, l'extrémité d'une pale à bord d'attaque parabolique en extrémité.

La figure 7 est un diagramme sur lequel est représentée l'évolution du vrillage de la pale montrée par la figure 6.

La figure 8 est un diagramme montrant le vrillage conforme à l'invention de la pale de la figure 6, par rapport aux limites conformes à la présente invention.

La figure 9 illustre schématiquement une installation pour l'essai de voilures tournantes permettant la mesure de leur portance et de la puissance consommée pour leur entraînement en rotation, ainsi que la mesure du bruit engendré.

La figure 10 est un diagramme illustrant l'amélioration des performances aérodynamiques d'une voilure tournante équipée de pales telles que celle montrée par la figure 6 et survrillée selon l'invention, par rapport à une voilure tournante connue équipée de pales identiques mais à vrillage linéaire.

La figure 11 est un diagramme illustrant la diminution du bruit de fonctionnement de la voilure tournante conforme à l'invention, par rapport à une voilure tournante identique, dont les pales sont vrillées linéairement.

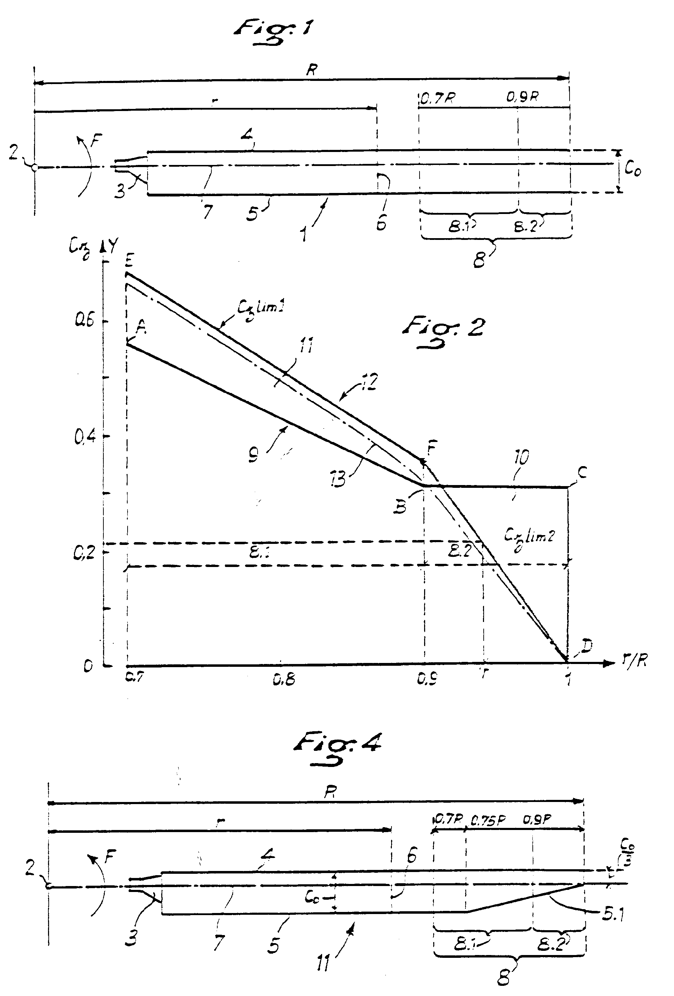

La pale 1, représentée schématiquement en plan sur la figure 1, est destinée à être entraînée en rotation dans le sens inverse des aiguilles d'une montre (flèche F) autour d'un axe 2, orthogonal au plan de la figure, par l'intermédiaire d'un moyeu non représenté. Elle comporte un pied de pale 3 permettant de la relier audit moyeu. Elle fait partie de la voilure tournante d'un aéronef comportant une pluralité de telles pales 1.

Le bord d'attaque 4 et le bord de fuite 5 de ladite pale 1 sont parallèles, de sorte que, en plan, ladite pale est rectangulaire et que la corde des profils successifs la constituant est constante et égale à Co. L'envergure de ladite pale, comptée à partir dudit axe de rotation 2, est égale à R. On désigne par r la distance en envergure séparant une section particulière 6 de l'axe 2.

Par ailleurs, ladite pale est vrillée autour de son axe de vrillage 7, qui peut être également son axe de commande de pas. Par "vrillage", on entend l'évolution angulaire le long de l'envergure R de la corde de portance nulle des profils ou sections 6.

De façon usuelle pour les pales d'hélicoptère, le vrillage de la pale 1 est constant le long de l'envergure R, c'est-à-dire qu'il est une fonction linéaire de r. Il est par exemple égal à - 10° (le signe moins désignant que le calage des profils est décroissant de l'emplanture de la pale 1 vers son extrémité).

Si, par exemple par mesure des pressions exercées en différents points répartis sur ladite pale, on détermine le coefficient de portance Cz le long de celle-ci, dans sa partie terminale extérieure 8 comprise entre les sections respectivement éloignées de l'axe 2 d'une distance 0,7 R et de la distance R, on peut tracer une courbe dont l'allure est celle de la courbe 9 représentée schématiquement sur la figure 2, pour le domaine de vol des basses et moyennes vitesses, en palier ou en faible pente.

Cette courbe schématique 9 comporte essentiellement trois parties successives :
– une première partie AB, sensiblement linéaire et décroissante correspondant à une première fraction de zone 8.1 de la partie terminale 8 et s'étendant entre des envergures relatives r/R respectivement égales à environ 0,7 et 0,9, ladite première partie AB pouvant être représentée par la fonction :

$$Cz \; = \; Czm - k1(r/R\text{-}k2) - \lambda \sin \Psi$$

dans laquelle :

. Czm est le coefficient de portance moyen de la voilure tournante à laquelle appartient la pale 1, ce coefficient de portance moyen Czm étant lui-même défini par l'expression

$$Czm \; = \; \frac{6\,Fz}{\rho S \sigma U^2}$$

dans laquelle Fz est la portance de la voilure tournante, $\rho$ la masse volumique de l'air, S la surface du disque formé par la voilure tournante ; $\sigma$ la plénitude de ce disque (c'est-à-dire le rapport entre le produit du nombre de pales 1 par la surface d'une pale et la surface S) et U la vitesse relative de l'air ; pour la plupart ces hélicoptères, Czm est de l'ordre de 0,4 ou 0,5 ;

. $\lambda$ est le paramètre d'avancement de l'aéronef, c'est-à-dire le rapport entre la vitesse d'avancement dudit aéronef et la vitesse périphérique de son rotor ; pour la plupart des hélicoptères, $\lambda$ est compris entre 0,25 et 0,35, pour les vitesses de croisière courantes ;

. $\Psi$ est l'azimut de la pale 1 ( $\Psi$ = 0 lorsque la pale 1 occupe la position arrière). Pour simplifier, on peut prendre un azimut moyen de 180°. Dans ces conditions, sin $\Psi$ = 0 et $\lambda$sin $\Psi$ = 0.

. k1 et k2 sont des constantes voisines de 1 ; par exemple k1 est égal à 1,2 et k2 à 0,83 dans le cas particulier expérimental sur lequel la Demanderesse a réalisé des mesures de pression en vol.
– une seconde partie BC, également sensiblement linéaire, correspondant à une seconde fraction de zone 8.2 de la partie terminale 8 et s'étendant entre des envergures relatives r/R respectivement égales à environ 0,9 et 1, et dans laquelle la valeur de Cz reste pratiquement constante ; et
– une troisième partie CD correspondant à un effondrement brutal du coefficient Cz au voisinage de l'envergure relative égale à 1.

Une telle courbe 9 est qualitativement représentative de l'évolution du coefficient de portance de toutes les pales rectangulaires à vrillage linéaire, dans le cas usuel où ledit vrillage est maintenu constant jusqu'à l'extrémité de la pale.

A cause de la répartition du coefficient de portance Cz selon la ligne BCD en extrémité de pale, les tourbillons marginaux sont importants, de sorte que les performances des voilures tournantes équipées de telles pales 1 sont affectées et que le fonctionnement en est bruyant.

Pour remédier à ces inconvénients, la présente invention prévoit par exemple de remplacer, entre les envergures relatives 0,9 et 1, la ligne BCD par une ligne FD, correspondant à une décroissance linéaire jusqu'à zéro du coefficient de portance Cz, la pente de la ligne FD étant déterminée par l'amélioration de performance recherchée. Ainsi, les tourbillons marginaux sont minimisés. Ce faisant, il en résulte pour la pale une perte de portance correspondant à l'aire du triangle 10 délimité entre les lignes BC, CD et FD.

Aussi, si l'on désire maintenir constante la portance globale, il est nécessaire d'augmenter le coefficient de portance en avant de 0,9 R, par exemple entre 0,7 R et 0,9 R.

Ceci est obtenu par une répartition de coefficient de portance Cz, entre 0,7 R et 0,9 R, telle que celle représentée par la ligne EF, disposée au-dessus de la ligne AB. Ainsi, entre les lignes AB et EF est délimitée une aire 11 correspondant à une augmentation de portance, susceptible de compenser la perte représentée par le triangle 10.

On voit donc qu'ainsi la répartition du coefficient de portance entre r = 0,7R et r = R est, conformément à l'invention, déterminée par une courbe 12, composée des lignes EF et FD. Cette courbe 12 constitue une limite supérieure, en dessous de laquelle doit se trouver la répartition réelle du coefficient de portance de la pale 1. La courbe en trait mixte 13 donne un exemple de répartition réelle de coefficient de portance.

De plus, selon l'invention, l'ordonnée Y de la portion EF de la courbe 12 satisfait à la relation

$$Y = Czm - 1,6(r/R - 0,87) - \lambda \sin \Psi$$

dans laquelle Czm est le coefficient de portance moyen de la voilure tournante à laquelle appartient la pale 1, $\lambda$ est le paramètre d'avancement de l'aéronef et $\Psi$ est l'azimut de la pale 1. Par simplification, on peut comme précédemment prendre $\Psi = 180°$, ce qui conduit à annuler $\lambda \sin \Psi$. Cette portion EF de la courbe 12 constitue donc une limite supérieure Czlim1 au coefficient de portance Cz de la pale 1 perfectionnée selon l'invention entre 0,7 R et 0,9 R. De même, la portion FD de la courbe 12, de préférence rectiligne, constitue une limite supérieure Czlim2 au coefficient de portance Cz de la pale 1 perfectionnée selon l'invention entre 0,9R et R.

Selon une autre particularité de la présente invention, pour déterminer la courbe 12 définissant les limites Czlim1 et Czlim2, on impose à la valeur absolue du vrillage de la pale 1 perfectionnée une limite inférieure, telle que celle représentée par la courbe 14 de la figure 3. Sur cette figure 3, on a représenté en abscisses l'envergure relative r/R des différentes sections successives de la pale 1 comprises entre r = 0,7R et r = R et en ordonnées la différence $\Delta$ (en degrés) entre l'angle limite de vrillage $\theta$lim desdites sections et l'angle de vrillage $\theta$0,7 R de la section disposée à r = 0,7R. Cette courbe 14 comporte une première partie GH, correspondant à la partie EF (Czlim1) de la courbe 12, et une seconde partie HI correspondant à la partie FD (Cslim2) de ladite courbe 12. Sur la figure 3, on a représenté également une courbe 15 définissant une loi de vrillage correspondant à la répartition du coefficient de portance Cz, illustrée par la courbe 13 de la figure 2, ainsi que deux courbes 16 et 17 correspondant à des pales connues pour hélicoptère. La courbe 16 concerne une pale rectangulaire ayant un vrillage linéaire global de -7,3° entre r = 0 et r = 0,925R et un vrillage inchangé entre r = 0,925R et r = R. La courbe 17 concerne une pale ayant un vrillage linéaire global de -12° entre r = 0 et r = R. On voit que ces deux courbes 16 et 17 sont disposées, totalement ou partiellement, en dehors de la limite de vrillage $\theta$lim définie par la courbe 14. Cette limite de vrillage $\theta$lim est donnée par l'expression

$$(2) \qquad \theta\text{lim} = \theta + \frac{1}{k} (\text{Czlim} - \text{Cz})$$

dans laquelle k représente dCz/di (i = incidence). Généralement, k est voisin de 0,13.

Ainsi, pour toute section élémentaire 6 de la pale 1, dont la distance en envergure $\underline{r}$ est comprise entre 0,7R et R, l'angle limite de vrillage $\theta$lim selon le perfectionnement de l'invention est égal à l'angle de vrillage $\theta$ de ladite section avant perfectionnement, augmenté du terme correcteur $\frac{1}{k}$ (Czlim - Cz), dans lequel Czlim est la valeur définie par la courbe 12 pour ladite distance $\underline{r}$ et Cz est la valeur du coefficient de portance pour ladite section 6 avant perfectionnement conformément à l'invention.

Dans le tableau I ci-après, on donne un exemple chiffré permettant de bien comprendre la présente invention. Ce tableau I comporte sept lignes I à VII, contenant chacune neuf valeurs correspondant chacune à une valeur d'envergure relative r/R, lesdites valeurs d'envergure relative étant échelonnées entre 0,7 et 1. Il se rapporte au perfectionnement selon l'invention d'une pale rectangulaire 1, dont le vrillage est conforme à celui donné par la courbe 16 de la figure 3 :

– la ligne (I) indique le vrillage de la pale rectangulaire 1 avant survrillage selon l'invention. On peut voir que ladite pale est vrillée linéairement à un angle de -7,3° jusqu'à r/R = 0,925, ledit angle de vrillage restant constant entre r/R = 0,925 et r/R = 1 (voir la courbe 16) ;

– la ligne (II) indique la répartition mesurée du coefficient de portance Cz en envergure avant le survrillage de l'invention, cette répartition étant conforme à la courbe 9 de la figure 2 ;

EP 0 360 661 B1

TABLEAU I

| r/R | 0,70 | 0,75 | 0,80 | 0,85 | 0,90 | 0,925 | 0,95 | 0,975 | 1 |
|---|---|---|---|---|---|---|---|---|---|
| $\theta$ (I) | -5,12 | -5,48 | -5,85 | -6,21 | -6,58 | -6,76 | -6,76 | -6,76 | -6,76 |
| Cz (II) | 0,56 | 0,50 | 0,44 | 0,38 | 0,32 | 0,32 | 0,32 | 0,32 | 0,32 |
| Czlim (III) | 0,68 | 0,60 | 0,52 | 0,44 | 0,36 | 0,27 | 0,18 | 0,09 | 0 |
| Czlim − Cz (IV) | 0,12 | 0,10 | 0,08 | 0,06 | 0,04 | -0,05 | -0,14 | -0,23 | -0,32 |
| $\frac{1}{0,13}$ (Czlim−Cz) (V) | 0,92 | 0,77 | 0,61 | 0,46 | 0,31 | -0,38 | -1,07 | -1,77 | -2,46 |
| $\theta$lim (VI) | -4,19 | -4,71 | -5,23 | -5,28 | -6,27 | -7,14 | -7,83 | -8,53 | -9,22 |
| $\theta$lim − $\theta$0,7R (VII) | 0 | -0,51 | -1,03 | -1,09 | -2,07 | -2,94 | -3,64 | -4,33 | -5,02 |

– la ligne (III) indique une répartition désirée pour le coefficient de portance limite Czlim (Czlim1 et Czlim2) conforme à la courbe 12 de la figure 2 ;

– la ligne (VI) indique la répartition de l'angle de vrillage de l'équation (1) ci-dessus, les lignes (IV) et (V) présentant les calculs intermédiaires de Czlim-Cz et de

$$\frac{1}{1,3} (Czlim - Cz) ;$$

– la ligne VII donne la différence entre l'angle de vrillage limite à une position $\underline{r}$ et l'angle de vrillage $\theta$ 0,7R à r = 0,7R (courbe 14 de la figure 3).

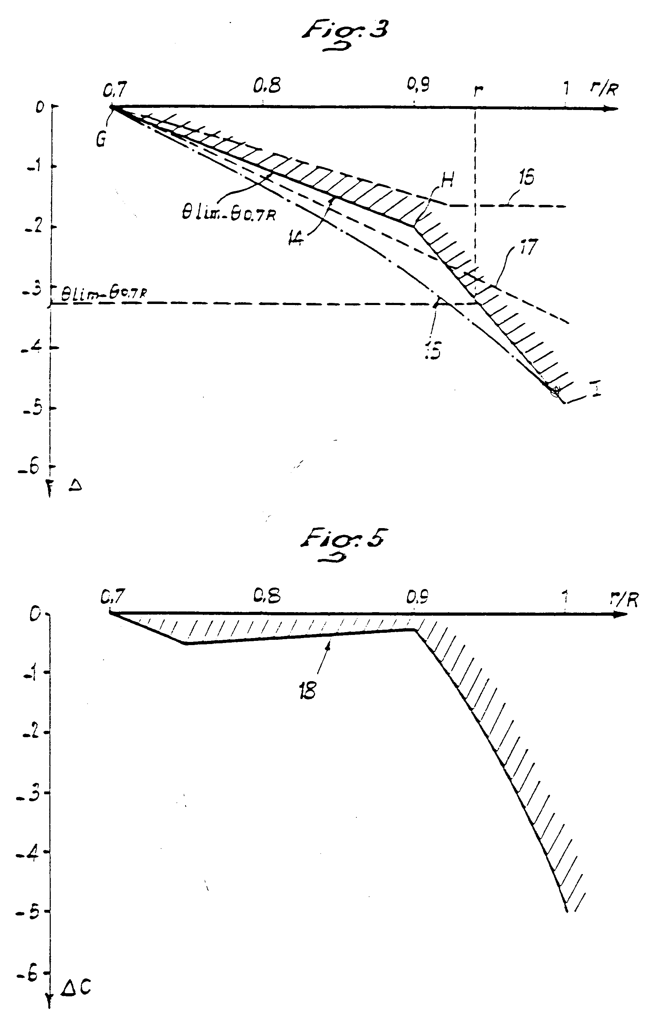

Sur la figure 4, on a représenté une pale 1.1 en tous points identique à la pale 1 montrée par la figure 1, sauf en ce qui concerne la partie extrême. En effet, au lieu d'être rectangulaire jusqu'à son extrémité comme la pale 1, la pale 1.1 est effilée en extrémité , du fait que le bord de fuite 5 comporte une partie extrême inclinée 5.1 se rapprochant du bord d'attaque 4. Cette partie extrême inclinée 5.1 du bord de fuite 5 est rectiligne et elle commence à r = 0,75R, où la corde du profil est égal à Co, pour se terminer à r = R, où la corde du profil n'est plus alors que Co/3.

Ainsi, dans la pale 1.1, la surface portante diminue de r = 0,75R à r = R, de sorte qu'il en résulte une diminution de portance favorisant l'action du survrillage conforme à la présente invention. Il est donc nécessaire de tenir compte de cette variation de surface portante, lorsque l'on veut appliquer à une pale à profil évolutif, les limites définies ci-dessus pour une pale rectangulaire.

De façon générale, si C(r) représente l'évolution de la corde C en fonction de la distance $\underline{r}$, les limites Czlim (Czlim1 et Czlim2) définies ci-dessus pour une pale rectangulaire sont corrigées, de façon à définir une nouvelle limite d'angle de vrillage $\theta$limC et une nouvelle limite de coefficient de portance Czlim1, telles que définies par les équations (3) et (4), ci-dessus.

Ainsi, il est possible de déterminer, en chaque point de l'extrémité 8 de la pale 1.1, l'angle de vrillage limite conforme à la présente invention, à partir des caractéristiques de la pale rectangulaire de la figure 1.

Dans le Tableau II, on donne un exemple chiffré, à rapprocher de l'exemple chiffré du Tableau I.

Dans le Tableau II,

– les lignes (I), (II) et (III), sont identiques aux lignes correspondantes du Tableau I et indiquent respectivement le vrillage, la répartition mesurée du coefficient de portance et la répartition désirée du coefficient de portance de la pale rectangulaire 1 avant perfectionnement selon l'invention ;

– la ligne (IV) indique le rapport Co/C(r), représentatif de l'effilement de l'extrémité de la pale 1.1 de la figure 4 ;

– la ligne (V) donne la limite $\theta$limC calculée par l'équation (4) ci-dessus ; et

– la ligne (VI) donne la différence $\Delta$ C = $\theta$ limC - $\theta$ 0,7R entre la limite $\theta$limC calculée et l'angle de vrillage $\theta$0,7R à la distance r = 0,7R.

TABLEAU II

| r/R | 0,70 | 0,75 | 0,80 | 0,85 | 0,90 | 0,925 | 0,95 | 0,975 | 1 |
|---|---|---|---|---|---|---|---|---|---|
| $\theta$ (I) | -5,12 | -5,48 | -5,85 | -6,21 | -6,58 | -6,76 | -6,76 | -6,76 | -6,76 |
| Cz (II) | 0,56 | 0,50 | 0,44 | 0,38 | 0,32 | 0,32 | 0,32 | 0,32 | 0,32 |
| Czlim (III) | 0,68 | 0,60 | 0,52 | 0,44 | 0,36 | 0,27 | 0,18 | 0,09 | 0 |
| Co/C(r) (IV) | 1 | 1 | 1,154 | 1,364 | 1,667 | 1,875 | 2,143 | 2,5 | 3 |
| $\theta$limC (V) | -4,20 | -4,71 | -4,62 | -4,52 | -4,43 | -5,33 | -6,25 | -7,49 | -9,22 |
| $\theta$limC - $\theta$0,7R (VI) | 0 | -0,51 | -0,42 | -0,32 | -0,23 | -1,13 | -2,05 | -3,29 | -5,02 |

EP 0 360 661 B1

Sur la figure 5, on a représenté la différence ΔC (en degré) en fonction de l'envergure relative r/R et on a obtenu la courbe 18 correspondante.

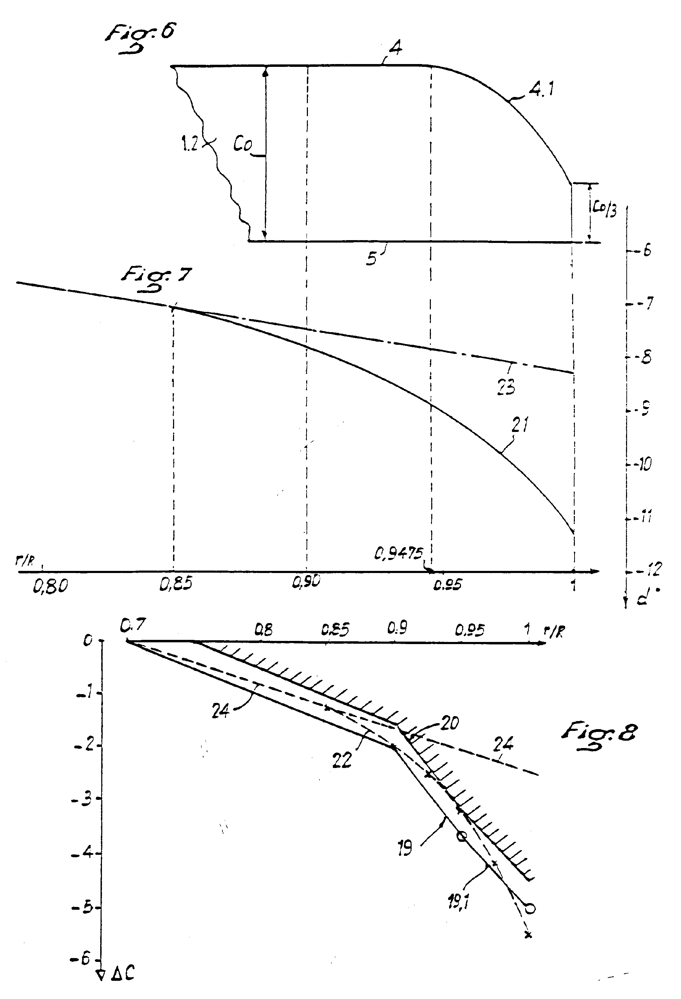

Sur la figure 6, rapportée à l'axe des abscisses r/R de la figure 7, on a représenté l'extrémité d'une pale 1.2. Cette pale 1.2 est en tous points identique à la pale 1 de la figure 1, sauf en ce qui concerne l'extrémité du bord d'attaque 4. En effet, entre r = 0,9475R et r = R, au lieu d'être rectiligne et parallèle au bord de fuite 5, le bord d'attaque 4 comporte une partie parabolique 4.1, par exemple telle que

$$C(r)/Co = 1 - 234,375 \ (r/R - 0,9466)^2$$

A r = 0,9475R, la corde de la pale est égale à Co, mais à r = R cette corde est égale à Co/3.

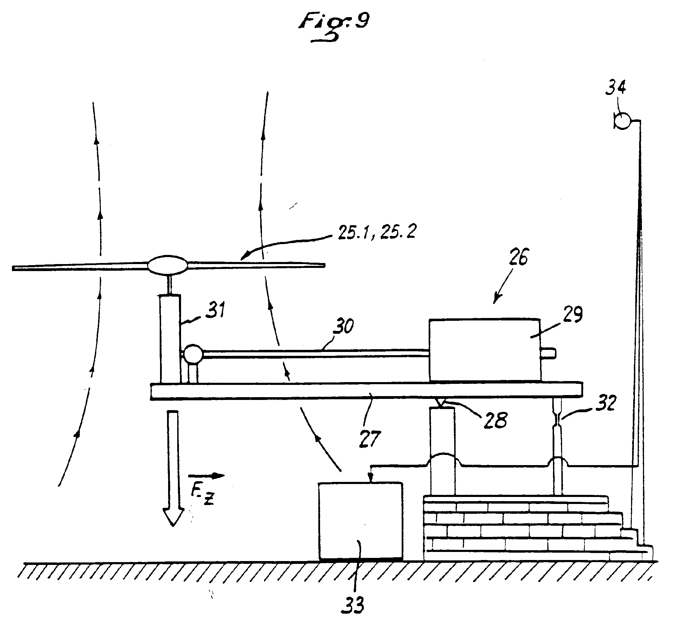

De ce qui précède, il ressort que l'on peut aisément calculer la limite θlimC correspondant à ladite pale 1.2. Les calculs correspondants sont rassemblés dans le tableau III, ci-après. Cette limite θlimC, ou plutôt la différence ΔC entre celle-ci et l'angle de vrillage θ 0,7R à r = 0,7R est représentée par la courbe 19 de la figure 8. Pour tracer cette courbe 19, entre r = 0,7R et r = 0,95R, ainsi que pour r = R, on a utilisé les résultats donnés par le Tableau III. En revanche, entre r = 0,95R et r = R, on a effectué un raccordement 19.1 à vrillage linéaire.

Sur la figure 8, à partir de la courbe 19 qui est représentative d'une limite de vrillage qui peut être qualifiée de "théorique", on a tracé une courbe 20 représentant Δ C + 0,5°, cette valeur 0,5° constituant une tolérance par rapport à la limite définie par la courbe 19. On a ainsi obtenu la limite "pratique" de

## TABLEAU III

| r/R | 0,70 | 0,80 | 0,85 | 0,90 | 0,95 | 1 |
|---|---|---|---|---|---|---|
| θ (I) | -5,12 | -5,85 | -6,21 | -6,56 | -6,76 | -6,76 |
| Cz (II) | 0,56 | 0,44 | 0,38 | 0,32 | 0,32 | 0,32 |
| Czlim (III) | 0,68 | 0,52 | 0,44 | 0,36 | 0,18 | 0 |
| Co/C(r) (IV) | 1 | 1 | 1 | 1 | 1 | 3 |
| θlimC (V) | -4,20 | -5,23 | -5,75 | -6,25 | -7,84 | -9,22 |
| θlimC - θ0,7R (VI) | 0 | -1,03 | -1,55 | -2,05 | -3,64 | -5,02 |

vrillage illustrée par la courbe 20. Cette limite de vrillage pratique a permis de définir le vrillage réel, conforme à l'invention, de la pale 1.2. Ce vrillage réel est représenté par la courbe 21 de la figure 7 et illustré par l'intermédiaire de la différence Δ C, par la courbe 22 de la figure 8.

Sur les figures 7 et 8, on a représenté également des courbes 23 et 24, illustrant un vrillage linéaire de -10° pour la pale 1.2. On voit que la pale 1.2 survrillée selon l'invention, est vrillée linéairement entre r = 0,7R et r = 0,85R, puis survrillée de la façon décrite ci-dessus entre r = 0,85R et r = R.

Pour illustrer les perfectionnements apportés par la présente invention, on a effectué des essais comparatifs entre une voilure tournante 25.1 équipée de trois pales 1.2 vrillées linéairement (conformément aux courbes 23 et 24) et une voilure tournante identique 25.2 équipée de trois pales 1.2 survrillées en extrémité selon la présente invention (conformément aux courbes 21 et 22).

Ces essais comparatifs ont été réalisés à l'aide du banc 26 représenté schématiquement sur la figure 9.

Ce banc d'essais 26 comporte essentiellement une balance 27, articulée en 28 et portant un moteur 29, une transmission 30 et un moyeu 31, auquel peut être fixée, soit la voilure tournante 25.1, soit la voilure tournante 25.2.

Ledit moyeu 31 est disposé à une extrémité de la balance 27, tandis qu'un dynamomètre 32 est relié à l'autre extrémité de ladite balance. On conçoit que lorsqu'une voilure tournante est fixée au moyeu 31 et est entraînée en rotation par le moteur 29 et la transmission 30, dont la puissance délivrée peut être mesurée avec précision par des moyens non représentés, elle exerce une poussée Fz susceptible d'être mesurée par le dynamomètre 32.

De plus, le banc d'essais 26 comporte des microphones 34 reliés à un appareillage 33 de mesure de niveau sonore.

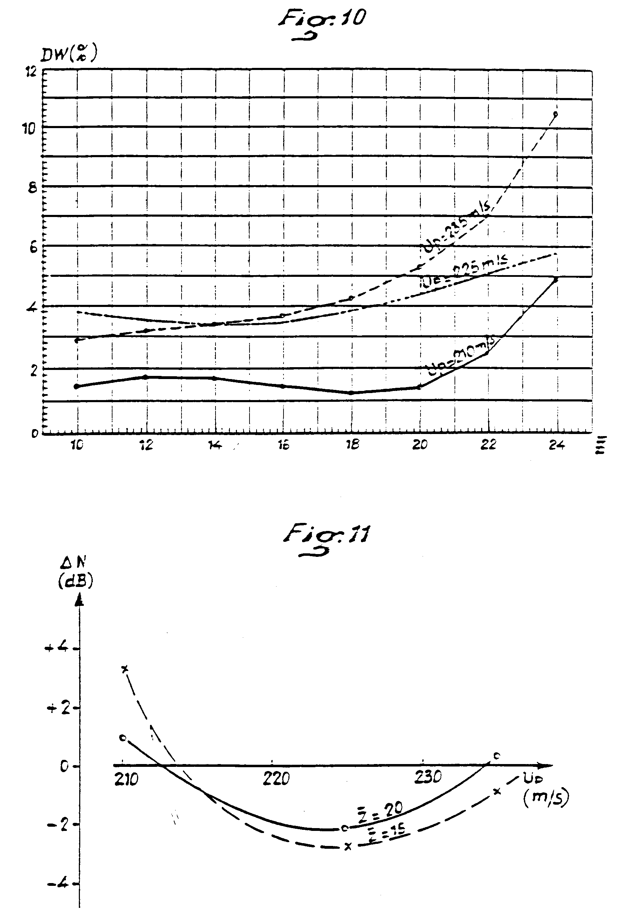

On a fait différents essais en fixant successivement les voilures tournantes 24.1 et 24.2 au moyeu 31 et on a mesuré les puissances absorbées par ces voilures en fonction de la poussée réduite $\bar{z}$ pour trois vitesses périphériques Up, respectivement égales à 210 m/s, 225 m/s et 235 m/s. Les résultats sont illustrés par la figure 10, sur laquelle DW représente, en pourcentage, la réduction de puissance absorbée par le rotor 25.2 par rapport à la puissance absorbée par le rotor 25.1 pour assurer une poussée donnée. Une telle réduction de puissance absorbée est de l'ordre de 3 à 4 % pour les sustentations et vitesses périphériques normales. Elle peut atteindre 10 % pour les fortes poussées ($\bar{z}$ = 24) et la vitesse périphérique de 235 m/s. Les performances aérodynamiques de la voilure conforme à l'invention sont donc fortement améliorées par rapport à celles des voilures connues.

Par ailleurs, sur la figure 11, on a représenté la réduction de bruit ΔN (en dB) de la voilure tournante 25.2 conforme à l'invention, par rapport à la voilure 25.1. La figure 11 montre que, en vol stationnaire et pour les poussées usuelles ($\bar{z}$ = 15), une réduction de bruit de l'ordre de 2dB est obtenue par la voilure tournante 25.2 par rapport à la voilure tournante 25.1, pour une plage de vitesse périphérique comprise entre 220 et 230 m/s. En vol d'avancement, pour les phases à grande vitesse ou pour les phases de descente, où des interactions pales-tourbillons marginaux ont plus d'opportunités de se produire, des réductions plus importantes de bruit sont constatées.

## Revendications

1 - Pale pour voilure tournante d'aéronef, dont les sections élémentaires successives le long d'au moins la plus grande partie de l'envergure $\underline{R}$ présentent une corde constante $\underline{Co}$ et sont vrillées de l'emplanture de ladite pale vers l'extrémité de celle-ci d'un angle θ dont la variation dθ/dr en fonction de la position $\underline{r}$ en envergure d'une section élémentaire considérée est constante, caractérisée en ce que ladite pale présente dans la zone d'extrémité s'étendant au moins entre 0,85 R et au moins 0,95 R un survrillage tel que le vrillage résultant soit dans ladite zone, inférieur ou au plus égal, en valeur absolue, à un vrillage limite θlim tel que le vrillage résultant soit pour r = R égal, en valeur absolue, à θlim afin de rendre Cz égal à zéro pour r = R, le vrillage limite étant donné par

$$(1) \qquad \theta\text{lim} = \theta + \frac{1}{k}\,(\text{Czlim - Cz})$$

équation dans laquelle k est le rapport de la variation du coefficient de portance Cz à la variation d'incidence i et Czlim est une valeur limite supérieure du coefficient de portance Cz telle que, d'une part, dans une première fraction de la zone d'extrémité s'étendant au moins entre r = 0,85 R et approximativement r = 0,9 R, le coefficient de portance limite ait une valeur

$$(2) \qquad \text{Czlim1} = \text{Czm - a(r/R - b)},$$

équation dans laquelle Czm est le coefficient de portance moyen de ladite voilure tournante, a et b des constantes au moins égales à 1,6 et 0,87 respectivement et telle que, d'autre part, dans une seconde fraction de la zone d'extrémité s'étendant entre approximativement r = 0,9 R et au moins r = 0,95R, le coefficient de portance limite ait une valeur Czlim2 décroissant linéairement de la valeur de Czlim1 donnée par l'équation (2) pour r = 0,9R jusqu'à la valeur zéro pour r = R.

2.- Pale pour voilure tournante selon la revendication 1, caractérisée en ce que ladite première fraction de zone d'extrémité s'étend entre r = 0,7R et approximativement r = 0,9R.

3 - Pale pour voilure tournante selon l'une des revendications 1 ou 2, caractérisée en ce que ladite seconde fraction de zone d'extrémité s'étend entre approximativement r = 0,9R et r = R.

4 - Pale pour voilure tournante selon l'une quelconque des revendications 1 à 3, telle que dans lesdites première et seconde fractions de zone d'extrémité, lesdites sections élémentaires successives présentent une corde évolutive C qui est une fonction C(r) de la position r en envergure d'une section élémentaire considérée, caractérisée en ce que, sur l'étendue desdites première et seconde fractions de zone d'extrémité, le vrillage de ladite pale est, en valeur absolue, avantageusement au moins égal au vrillage limite θlimC donné par

$$(3) \qquad \theta limC = \theta + \frac{1}{k}(Czlim.Co/C(r) - Cz)$$

équation dans laquelle le rapport Co/C(r) est représentatif de l'effilement de l'extrémité de la pale et le coefficient de portance Czlim est choisi dans lesdites fractions de zone d'extrémité au plus égal à une valeur CzlimC telle que

$$(4) \qquad CzlimC = Czlim.Co/C(r),$$

expression dans laquelle Czlim représente soit Czlim1, soit Czlim2 en fonction de celle desdites première ou seconde fraction de zone d'extrémité qui est considérée.

5 - Pale pour voilure tournante selon l'une quelconque des revendications 1 ou 4,
caractérisée en ce que, sur l'étendue desdites première et seconde fractions de zone d'extrémité, le vrillage de ladite pale est, en valeur absolue, au moins égal audit vrillage limite diminué d'une tolérance.

6 - Pale selon la revendication 5,
caractérisée en ce que ladite tolérance est de l'ordre de 0,5°.

7 - Pale pour voilure tournante selon l'une quelconque des revendications 1, 4, 5 ou 6,
caractérisée en ce que ladite seconde fraction de zone d'extrémité est définie par le domaine s'étendant d'approximativement r = 0,9R à r = 0,95R et par le point r = R, un raccordement à vrillage linéaire étant réalisé entre r = 0,95R et r = R, quelle que soit la fonction C(r).

8 - Voilure tournante pour aéronef,
caractérisée en ce qu'elle est pourvue de pales telles que spécifiées selon l'une quelconque des revendications 1 à 7.


## Patentansprüche

1. - Drehflügelflugzeugblatt, dessen aufeinanderfolgende Elementarquerschnitte längs mindestens des größten Teiles der Flügelspannweite R eine konstante Sehne Co aufweisen und von der Wurzel des genannten Blattes zu dessen Ende hin um einen Winkel $\Theta$ verwunden sind, dessen Änderung $d\Theta/dr$ in Abhängigkeit von der Radialposition r eines betrachteten Elementarquerschnittes konstant ist,
dadurch gekennzeichnet, daß das genannte Blatt in der Endzone zwischen mindestens 0,85 R und mindestens 0,95 R eine solche Überverwindung aufweist, daß in der genannten Zone die resultierende Verwindung ihrem Absolutwert nach kleiner oder höchstens gleich einer Grenzverwindung $\Theta$lim ist, so daß die resultierende Verwindung für r = R ihrem Absolutwert nach gleich $\Theta$lim ist, so daß Cz für r = R zu Null wird, wobei die Grenzverwindung durch

$$(1) \qquad \Theta lim = \Theta + \frac{1}{k}(czlim - Cz)$$

gegeben ist, in welcher Gleichung k das Verhältnis der Änderung der Auftriebszahl Cz zur Änderung des Anströmwinkels i und Czlim ein oberer Grenzwert der Auftriebszahl Cz ist, so daß einerseits in einem ersten Abschnitt der Endzone, welcher sich mindestens zwischen r = 0,85 R und r = 0,9 R erstreckt, die Grenzauftriebszahl einen Wert

$$(2) \qquad Czlim1 = Czm - a(r/R - b)$$

aufweist, in welcher Gleichung Czm die mittlere Auftriebszahl des genannten Drehflügels ist und a bzw. b Konstanten sind, welche mindestens gleich 1,6 bzw. 0,87 sind, und so daß andererseits in einem zweiten Abschnitt der Endzone zwischen ungefähr r = 0,9 R und mindestens r = 0,95 R die Grenzauftriebszahl einen Wert Czlim2 aufweist, welcher von dem durch die Gleichung (2) gegebenen Wert Czliml für r = 0,9 R linear auf den Wert Null für r = R abnimmt.

2. - Drehflügelflugzeugblatt gemäß Anspruch 1, dadurch gekennzeichnet, daß der genannte erste Abschnitt der Endzone sich zwischen r = 0,7 R und ungefähr r = 0,9 R erstreckt.

3. - Drehflügelflugzeugblatt gemäß Anspruch 1 oder Anspruch 2, dadurch gekennzeichnet, daß der genannte zweite Abschnitt der Endzone sich zwischen ungefähr r = 0,9 R und r = R erstreckt.

4. - Drehflügelflugzeugblatt gemäß einem der Ansprüche 1 bis 3, bei welchem die genannten aufeinanderfolgenden Elementarquerschnitte in dem genannten ersten Abschnitt und in dem genannten zweiten Abschnitt der Endzone eine veränderliche Sehne C aufweisen, welche eine Funktion C(r) der Radialposition r des jeweiligen Elementarquerschnittes ist,
dadurch gekennzeichnet, daß über die Länge des genannten ersten Abschnittes und des genannten zweiten Abschnittes der Endzone die Verwindung des genannten Blattes ihrem Absolutwert nach vorteilhafterweise mindestens gleich der Grenzverwindung $\Theta$limC ist, welche durch

$$(1) \qquad \Theta limC = \Theta + \frac{1}{k}(Czlim.Co/C(r) - Cz)$$

EP 0 360 661 B1

gegeben ist, in welcher Gleichung das Verhältnis Co/C(r) die Verjüngung des Blattendes darstellt und die Auftriebszahl czlim in den genannten Endzonenabschnitten höchstens gleich einem Wert CzlimC gewählt wird, so daß

$$(4) \qquad CzlimC = Czlim.Co/C(r)$$

gilt, in welchem Ausdruck Czlim je nachdem, ob der genannte erste Abschnitt oder der genannte zweite Abschnitt der Endzone betrachtet wird, Czlim1 bzw. Czlim2 darstellt.

5. - Drehflügelflugzeugblatt gemäß einem der Ansprüche 1 bis 4, dadurch gekennzeichnet, daß über die gesamte Länge des genannten ersten Abschnittes und des genannten zweiten Abschnittes der Endzone die Verwindung des genannten Blattes ihrem Absolutwert nach mindestens gleich der um einen Toleranzbetrag verminderten Grenzverwindung ist.

6. - Drehflügelflugzeugblatt gemäß Anspruch 5, dadurch gekennzeichnet, daß der genannte Toleranzbetrag in der Größenordnung von 0,5° liegt.

7. - Drehflügelflugzeugblatt gemäß einem der Ansprüche 1, 4, 5 oder 6, dadurch gekennzeichnet, daß der genannte zweite Abschnitt der Endzone durch den Bereich, welcher sich von ungefähr r = 0,9 R bis r = 0,95 R erstreckt, sowie durch den Punkt r = R definiert wird, wobei zwischen r = 0,95 R und r = R unabhängig von der Funktion C(r) eine Verbindung mit linearer Verwindung realisiert ist.

8. - Rotor für Drehflügelflugzeug, dadurch gekennzeichnet, daß er mit Blättern ausgerüstet ist, wie sie in einem der Ansprüche 1 bis 7 beschrieben sind.


## Claims

1. Blade for a rotary wing of an aircraft, whereof the successive elementary sections along at least the greater part of the span $\underline{R}$ have a constant chord $\underline{Co}$ and are twisted from the root of said blade towards the tip of the latter by an angle $\theta$ whereof the variation $d\theta/dr$ as a function of the spanwise position $\underline{r}$ of a given elementary section is constant, characterised in that said blade has in the tip zone extending at least between 0.85R and at least 0.95R an extra twist such that the resultant twist is, in said zone, less than or at most equal, as an absolute value, to a limit twist $\theta$lim such that, where r = R, the resultant twist is equal, as an absolute value, to $\theta$lim so as to render Cl equal to zero where r = R, the limit twist being given by

$$(1) \qquad \theta lim = \theta + \frac{1}{k}(Cllim - Cl),$$

in which equation k is the ratio of the variation in the coefficient of lift Cl to the variation in incidence i and Cllim is an upper limit value of the coefficient of lift Cl such that, on the one hand, in a first portion of the tip zone ex:ending at least between r = 0.85R and approximately r = 0.9R, the limit coefficient of lift has a value

$$(2) \qquad Cllim1 = Clm - a(r/R - b),$$

in which equation Clm is the mean coefficient of lift of said rotary wing, a and b constants at least equal to 1.6 and 0.87 respectively and such that, on the other hand, in a second portion of the tip zone extending between approximately r = 0.9R and at least r = 0.95R, the limit coefficient of lift has a value Cllim2 decreasing linearly from the value of Cllim1 given by the equation (2) where r = 0.9R down to the value zero where r = R.

2. Blade for a rotary wing according to Claim 1, characterised in that said first portion of tip zone extends between r = 0.7R and approximately r = 0.9R.

3. Blade for a rotary wing according to either of Claims 1 or 2, characterised in that said second portion of tip zone extends between approximately r = 0.9R and r = R.

4. Blade for a rotary wing according to any one of Claims 1 to 3, such that in said first and second portions of tip zone, said successive elementary sections have an evolutive chord C which is a function C(r) of the spanwise position r of a given elementary section, characterised in that, over the extent of said first and second portions of tip zone, the twist of said blade is, as an absolute value, advantageously at least equal to the limit twist $\theta$limC given by

$$(3) \qquad \theta limC = \theta + \frac{1}{k}(Cllim.Co/C(r) - Cl)$$

in which equation the ratio Co/C(r) represents the taper ratio of the tip of the blade and the coefficient of lift Cllim is selected in said portions of tip zone at most equal to a value CllimC such that

12

$$(4) \qquad CllimC = Cllim.Co/C(r),$$

in which expression Cllim represents either Cllim1 or Cllim2 depending on which of said first or second portions of tip zone is considered.

5. Blade for a rotary wing according to either one of Claims 1 or 4, characterised in that, over the extent of said first and second portions of tip zone, the twist of said blade is, as an absolute value, at least equal to said limit twist less a tolerance.

6. Blade according to Claim 5, characterised in that said tolerance is of the order of 0.5°.

7. Blade for a rotary wing according to any one of Claims 1, 4, 5 or 6, characterised in that said second portion of tip zone is defined by the area extending from approximately r = 0.9R to r = 0.95R and by the point r = R, a transition to linear twist being made between r = 0.95R and r = R, whatever the function C(r).

8. Rotary wing for an aircraft, characterised in that it is provided with blades as specified according to any one of Claims 1 to 7.

Fig. 1

Fig. 2

Fig. 4

14

## Fig. 3

## Fig. 5

Fig. 6

Fig. 7

Fig. 8

Fig. 9

Fig. 10

Fig. 11